(19) Europäisches Patentamt
European Patent Office
Office européen des brevets

(11) **EP 3 663 979 A1**

(12) **EUROPEAN PATENT APPLICATION**

(43) Date of publication:
**10.06.2020 Bulletin 2020/24**

(51) Int Cl.:
**G06K 9/00** (2006.01)   **G06K 9/62** (2006.01)

(21) Application number: **19214264.4**

(22) Date of filing: **06.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.12.2018 US 201862776443 P**

(71) Applicant: **Definiens GmbH**
**80636 München (DE)**

(72) Inventors:
• **SCHMIDT, Günter**
 **80636 München (DE)**
• **BRIEU, Nicolas**
 **80636 München (DE)**
• **KAPIL, Ansh**
 **80636 München (DE)**
• **LESNIAK, Jan Martin**
 **80636 München (DE)**

(74) Representative: **PATERIS Patentanwälte PartmbB**
**Altheimer Eck 13**
**80331 München (DE)**

(54) **A DEEP LEARNING METHOD FOR PREDICTING PATIENT RESPONSE TO A THERAPY**

(57) Disclosed is an *in vitro* method for indicating how a cancer patient will respond to a predetermined therapy relies on spatial statistical analysis of classes of cell centers in a digital image of tissue of the cancer patient. The cell centers are detected in the image of stained tissue of the cancer patient. For each cell center, an image patch that includes the cell center is extracted from the image. A feature vector is generated based on each image patch using a convolutional neural network. A class is assigned to each cell center based on the feature vector associated with each cell center. A score is computed for the image of tissue by performing spatial statistical analysis based on classes of the cell centers. The score indicates how the cancer patient will respond to the predetermined therapy. The predetermined therapy is recommended to the patient if the score is larger than a predetermined threshold. Further disclosed is an *in vitro* method for indicating a survival probability of the cancer patient with the same features.

METHOD FOR PREDICTING PATIENT RESPONSE TO A THERAPY 10

START

ACQUIRE A DIGITAL IMAGE OF A TISSUE SLICE THAT HAS BEEN STAINED USING A BIOMARKER ~ 11

DETECT CELL CENTERS ON A DIGITAL IMAGE OF STAINED TISSUE OF A CANCER PATIENT ~ 12

FOR EACH CELL CENTER IN THE DIGITAL IMAGE, EXTRACT AN IMAGE PATCH THAT INCLUDES THE CELL CENTER ~ 13

GENERATE A FEATURE VECTOR BASED ON EACH IMAGE PATCH USING A CONVOLUTIONAL NEURAL NETWORK ~ 14

ASSIGN A CLASS TO EACH CELL CENTER BASED ON THE FEATURE VECTOR ASSOCIATED WITH EACH CELL CENTER ~ 15

COMPUTE A SCORE FOR THE DIGITAL IMAGE OF TISSUE BY PERFORMING SPATIAL STATISTICAL ANALYSIS ON THE CLASSES OF THE CELL CENTERS SUCH THAT THE SCORE INDICATIVES HOW THE CANCER PATIENT WILL RESPOND TO A PREDETERMINED THERAPY ~ 16

RECOMMEND THE PREDETERMINED THERAPY IF THE SCORE IS LARGER THAN A PREDETERMINED THRESHOLD ~ 17

END

FIG. 1

EP 3 663 979 A1

**Description**

**Field of the invention**

The present invention relates to a method for computing a score indicative of how a cancer patient will respond to a predetermined therapy. Another aspect of the invention relates to a method for computing a score for a cancer patient indicative of a survival probability of the cancer patient.

**Background of the invention**

Assessing a cancer patient's response probability to a given treatment is an essential step in determining a cancer patient's treatment regimen. Such an assessment is often based on histological analysis of tissue samples from a given patient and involves for example identifying and classifying cancers using standard grading schemes. Immunohistochemical (IHC) staining can be used to distinguish marker-positive cells that express a particular protein from marker-negative cells that do not express the protein. IHC staining typically involves multiple dyes, which includes one or more dyes connected to protein-specific antibodies and another dye that is a counterstain. A common counterstain is hematoxylin, which labels DNA and thus stains nuclei.

A protein specific stain or biomarker can be used to identify the regions of the tissue of the cancer patient that are likely to exhibit a response to a predetermined therapy. For example, a biomarker that stains epithelial cells can help to identify the suspected tumor regions. Then other protein specific biomarkers are used to characterize the cells within the cancerous tissue. The cells stained by a specific biomarker can be identified and quantified, and subsequently a score indicating the number of positively stained cells and negatively stained cells can be visually estimated by pathologists. This score can then be compared to scores of other cancer patients that have been calculated in the same way. If the response of these other patients to a given cancer treatment is known, the pathologist can predict, based on a comparison of the score calculated for the cancer patient with the scores of the other patients, how likely the cancer patient is to respond to a given treatment. However, visual assessment by pathologists is prone to variability and subjectivity.

Thus, a computer-based method is sought for generating a repeatable and objective score indicating a cancer patient's response to a given treatment.

**Summary of the invention**

The invention relates to an *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;
- assigning a class to each cell center based on the feature vector associated with each cell center; and
- computing a score for the digital image of tissue by performing spatial statistical analysis on the classes of the cell centers, wherein the score is indicative of how the cancer patient will respond to a predetermined therapy.

The invention further relates to an *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;
- assigning a class to each cell center based on the feature vector associated with each cell center; and
- computing a score for the digital image of tissue by performing spatial statistical analysis on the classes of the cell centers, wherein the score is indicative of a survival probability of the cancer patient.

**Brief description of the drawings**

FIG. 1 is a flowchart of steps by which an analysis system analyzes digital images of tissue from a cancer patient and predicts how the cancer patient will likely respond to a predetermined therapy.
FIG. 2 is an image of tissue of a cancer patient that has been stained.
FIG. 3 is an image showing the optical density of the stain in FIG. 2.

FIG. 4 illustrates an example of image analysis performed on the image of FIG. 2 by a convolutional neural network.

FIG. 5 is a segmented image showing epithelium in gray and non-epithelial tissue in white.

FIG. 6 is a segmented image showing cell membranes.

FIG. 7 is a segmented image showing cell nuclei.

FIG. 8 is a segmented image showing cell centers.

FIG. 9 is the same image as FIG. 4 without the nuclei being marked.

FIG. 10 is a more detailed view of the region in FIG. 9 enclosed by the dashed rectangle.

FIG. 11 shows an example of k-means cluster analysis performed for four patients to generate patient profiles.

FIG. 12 is a plot illustrating cluster analysis in which the stained cells of four patients are classified into one of four classes.

FIG. 13 is shows a plot in which each cell of stained tissue of a specific patient is classified into one of four classes corresponding to the generated patient profiles.

FIG. 14 shows a random jitter graph used to visualize the distribution of cell centers classified into specific classes or profiles within a defined area of the digital image of the stained tissue.

FIG. 15 shows a quantification graph used to visualize the number of cell centers classified into a specific class within a defined area of the digital image of the stained tissue. The size of each bubble in the graph corresponds to the geometric mean of the number of cells in two specified classes.

FIG. 16 shows a graph of scores indicating a patient's response to a given treatment for five patients.

FIG. 17 is a table listing the numerical values of the scores depicted in the graph of FIG. 16.

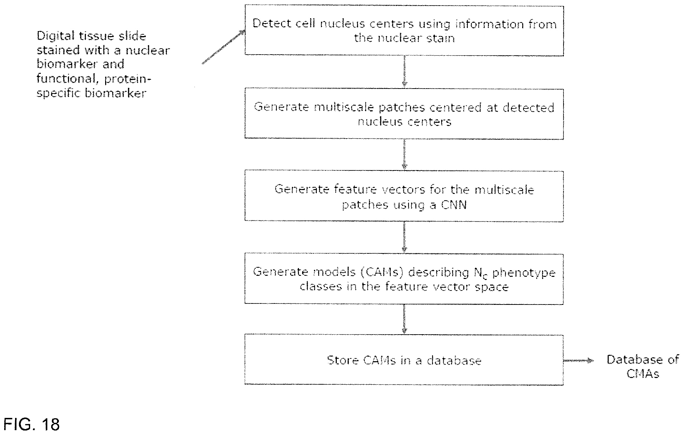

FIG. 18 is a flow chart of the generation of a database of cell phonotypes characterized by cluster analysis models (CAMs) derived from a convolutional neural network (CNN) layer.

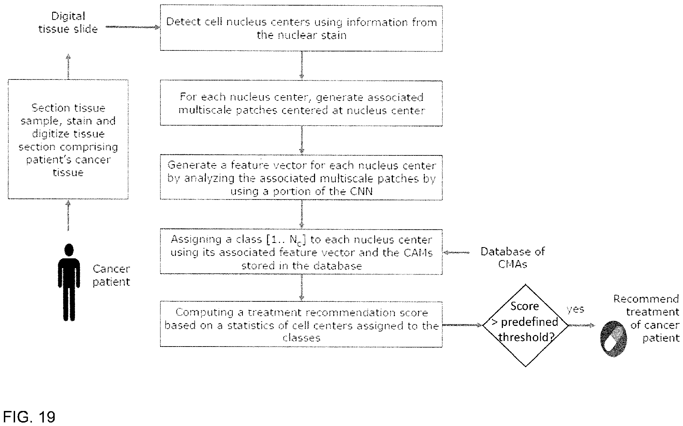

FIG. 19 is a flow chart of the recommendation of a therapy treatment for a cancer patient using a database of CAMs.

FIG. 20 shows how to generate feature vectors for the multiscale patches using a GAN-CNN.

FIG. 21 shows how to generate feature vectors for the multiscale patches using a two-GAN-CNN.

FIG. 22 shows how to generate feature vectors for the multiscale patches using an Autoencoder-CNN.

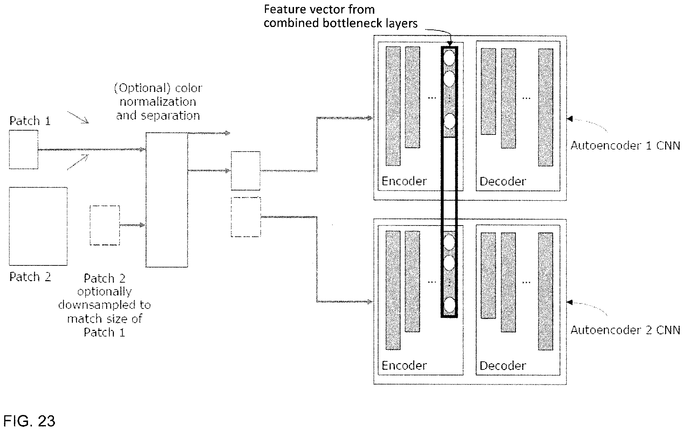

FIG. 23 shows how to generate feature vectors for the multiscale patches using a two-Autoencoder- CNN.

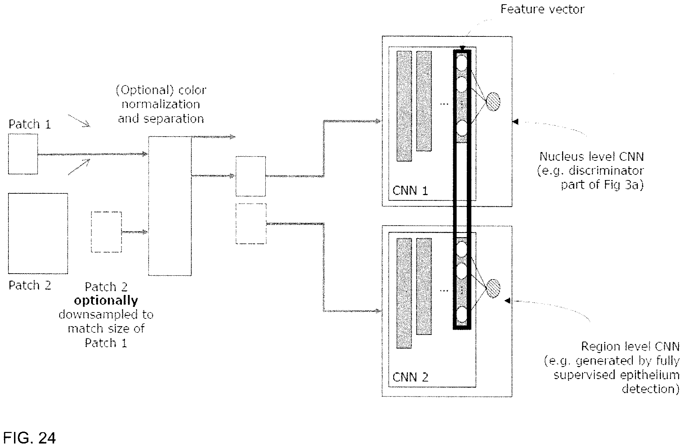

FIG. 24 shows how to generate feature vectors for the multiscale patches using a first CNN for nucleus classification and a second CNN for anatomical region classification

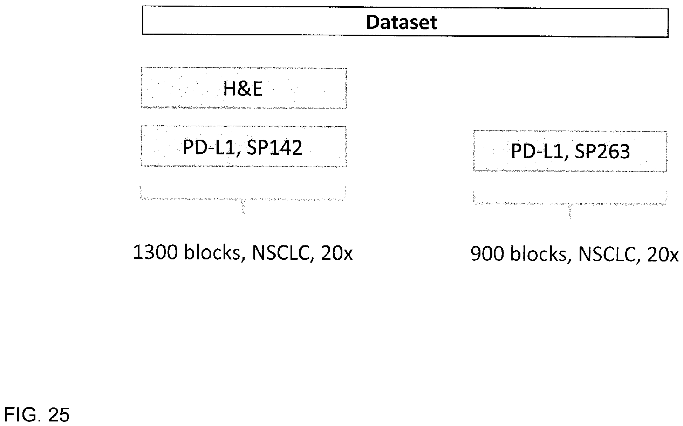

FIG. 25 shows a survival analysis. The outcome is i) progression-free survival; ii) overall survival, and iii) best overall response. The frame conditions are i) insight into solution (no "black box"), ii) hypothesis generation tool, iii) utilization of context at different magnification, and iv) potential to encode biological knowledge.

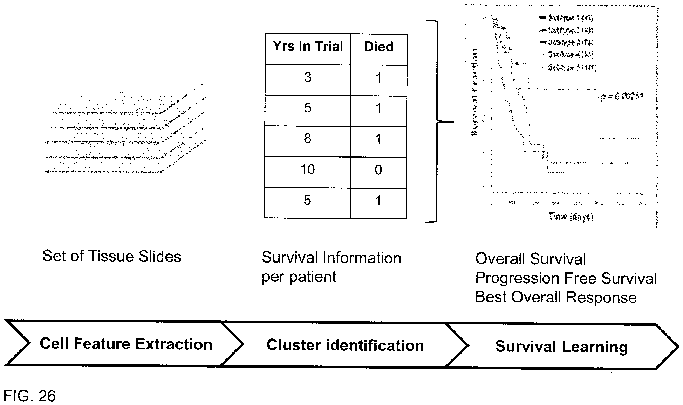

FIG. 26 shows the main approach. The cell feature extraction comprises i) deep supervised/unsupervised models for feature extraction, and ii) hierarchical multi-resolution multi-level approach. The cluster identification comprises cluster analysis to identify subgroups of cells based on extracted features. The survival learning comprises i) mapping of cellular subgroup spatial distributions via heatmaps, ii) correlating densities or percentages of subgroups against outcome, and iii) learn models for survival prediction.

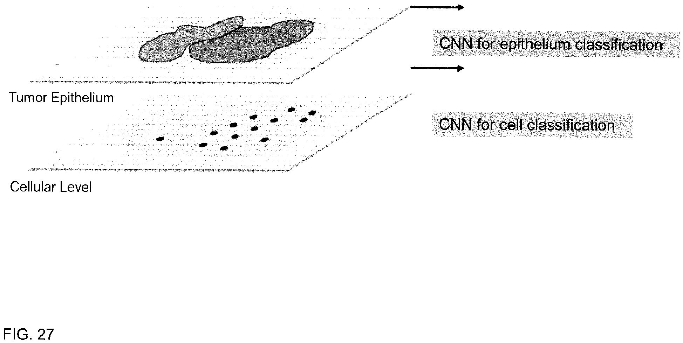

FIG. 27 shows deep supervised networks I. Detection encompasses i) cell detection using rules or random forest regression of proximity map (see Brieu, N.

and Schmidt, G. (2017), ii) cell classification using convolutional neural network (CNN) (see Vandenberghe, M.E. et al., (2017)), and iii) semantic segmentation of epithelial tumor regions using CNN (see Meier, A. and Schmidt, G. (2018)). Cell-based feature encompasses i) "deep supervised feature" extraction at each detected cell location from the last fully connected layers of the classification and

segmentation CNNs, and ii) modelling of hierarchy using the inventors' cognition network technology (CNT). The requirements encompass cell and region annotations to train the RF and CNN models.

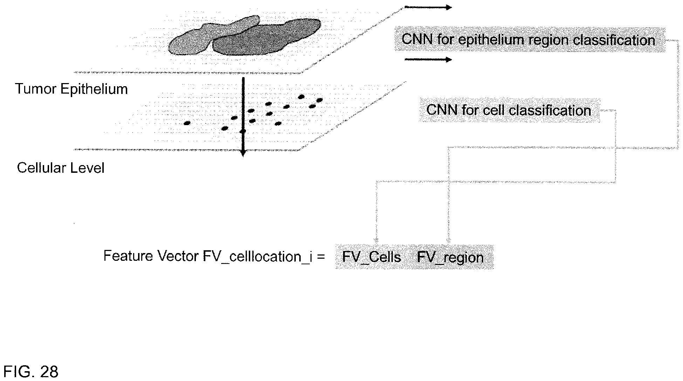

FIG. 28 shows deep supervised networks II. Aggregate features from the cellular and epithelium levels into a deep multi-level and supervised feature vector.

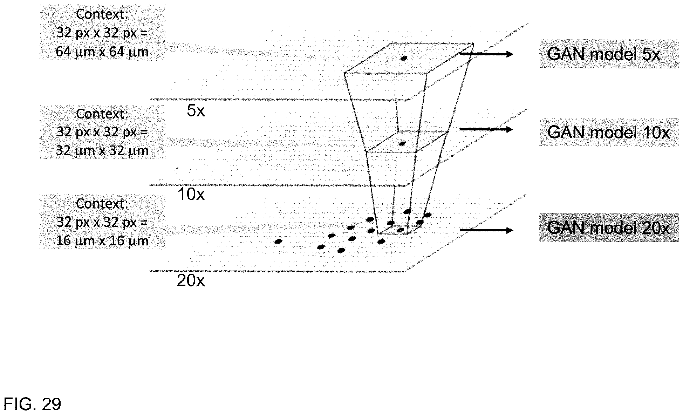

FIG. 29 shows deep unsupervised networks I. Detection encompasses cell detection using rules or random forest regression of proximity map (see Brieu, N.

and Schmidt, G. (2017). Cell-based feature encompasses i) "deep unsupervised feature" extraction at each detected cell location using generative adversarial networks (infoGAN, BeGAN (see Kapil, A. et al., (2018) at multiple resolutions (5x, 10x, 20x), and ii) modelling of hierarchy using the inventors' cognition network technology (CNT). The requirements encompass cell annotations to train the RF model.

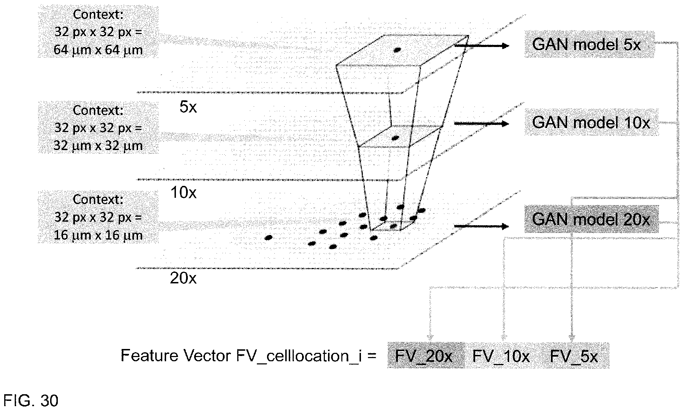

FIG. 30 shows deep unsupervised networks II. Aggregate features from multiple resolutions into a deep multi-level resolution and unsupervised feature vector.

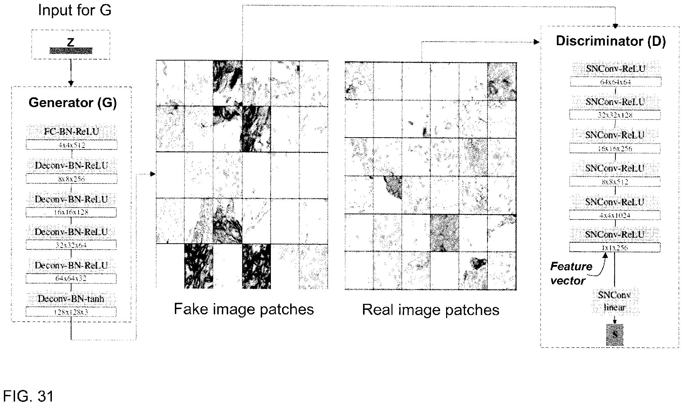

FIG. 31 shows a generative adversarial network (GAN).

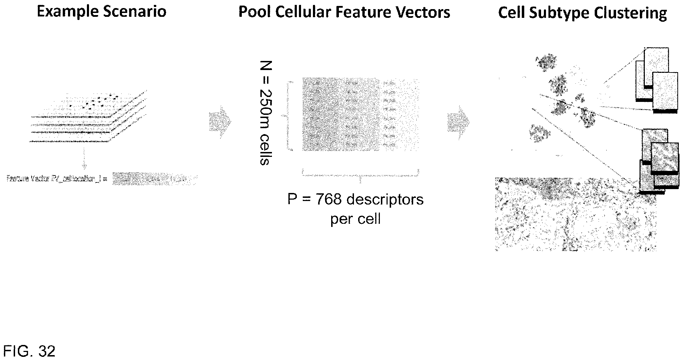

FIG. 32 shows the identification of cell subtypes. The example scenario starts with 500 slides, which are about 500.000 cells per slide. This are three hierarchy levels with 256 features each, indicating 768 features per cell.

Feature Vector FV_celllocation_i = FV_5x; FV_10x and FV_20x

The goal is to identify meaningful cellular subtypes in a data-drive way. Low-level cellular features and high-level region context are encoded in the feature vector. It provides insight via i) visual feedback on clusters for inspection of patches (e.g. T-SNE plots), ii) direct visual feedback using the inventors' insights portal, and iii) analysis of sub-features, e.g. from different hierarchy levels alone.

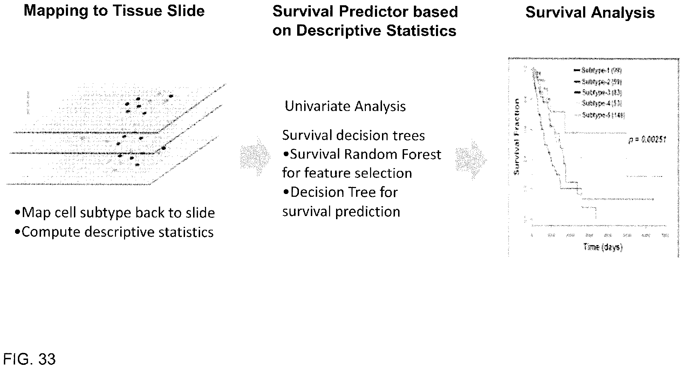

FIG. 33 shows the descriptive features. The goal is a straightforward modeling of the survival relationship. It encompasses i) univariate analysis which provides direct insight, ii) survival random forest which allows feature selection according to importance, and iii) survival decision trees which allow insight into a model for prediction.

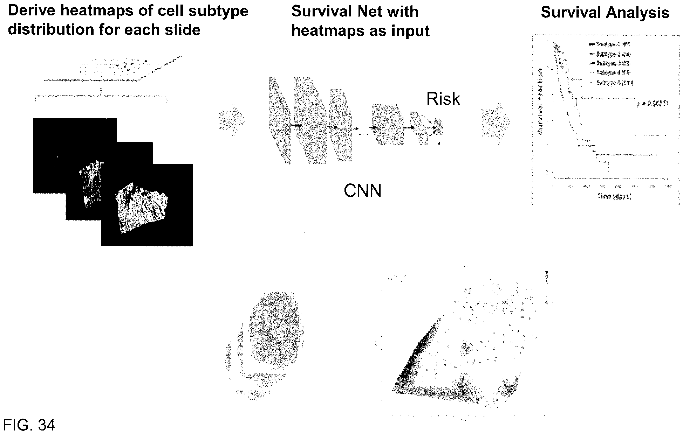

FIG. 34 shows the learning risk features. The goal is to learn risk features from spatial aggregation of cellular subtypes. It encompasses i) risk maps for evaluation which cell densities are important, and ii) cohort-level analysis using the inventors' macroscope, both indicated in the lower part of the FIG. 34.

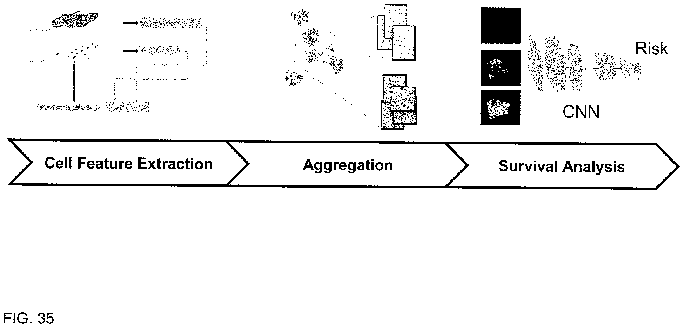

FIG. 35 shows the summary of the technical approach. Cell feature extraction encompasses i) control over feature extraction process using hierarchy including magnification, ii) validation of features and their contribution together with clustering, and iii) option to encode biological knowledge through manual features. Aggregation encompasses i) visual data exploration of cell types and patch clustering on hierarchical levels, ii) possibility of semantic post-processing via Cognition Network Technology (CNT), and iii) Validation of clustering model in combination with survival data. Survival analysis encompasses i) analysis of descriptive features to gain insight into model mechanisms, ii) CNN with learnt risk features using risk maps to find indicative regions, and iii) cohort-level analysis through the inventors' macroscope.

**Detailed description of the invention**

The invention relates to an *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;
- assigning a class to each cell center based on the feature vector associated with each cell center; and
- computing a score for the digital image of tissue by performing spatial statistical analysis on the classes of the cell centers, wherein the score is indicative of how the cancer patient will respond to a predetermined therapy.

In a preferred embodiment the method further comprises:

- recommending the predetermined therapy if the score is larger than a predetermined threshold.

A method for indicating how a cancer patient will respond to a predetermined therapy relies on spatial statistical analysis of classes of cell centers present in a digital image of tissue of the cancer patient. The cell centers are detected in the digital image of stained tissue of the cancer patient. For each cell center, an image patch that includes the cell center is extracted from the digital image. A feature vector is generated based on each image patch using a convolutional neural network. A class is assigned to each cell center based on the feature vector associated with each cell center. A score is then computed for the digital image of tissue by performing spatial statistical analysis on the classes of the cell centers. The score is indicative of how the cancer patient will respond to the predetermined therapy. The predetermined therapy is recommended to the cancer patient if the score is larger than a predetermined threshold.

The disclosed method uses a convolutional neural network to generate a feature vector of an image patch including a cell center extracted from a digital image of tissue of a cancer patient. The tissue has been stained. For example, tissue has been stained with a stain that stains cellular nuclei or the tissue has been stained to mark membranes.

In a first step, cell centers are detected on a digital image of tissue of a cancer patient, wherein the tissue has been stained. In a second step, for each cell center, an image patch that includes the cell center is extracted. Subsequently, in a third step, for each cell center a feature vector is generated based on each image patch using a convolutional neural network. Based on the feature vector associated with each cell center, in a fourth step a class is assigned to each cell center and in a fifth step, a score for the digital image of tissue is computed by performing spatial statistical analysis on the classes of the cell centers, wherein the score is indicative of how the cancer patient will respond to a predetermined therapy.

According to an embodiment of the disclosed method, the spatial statistical analysis performed on the classes of the cell centers generates a profile for the digital image, and the score for the cancer patient is computed by comparing the profile for the digital image of the cancer patient with profiles generated from images of tissue from a plurality of patients whose responses to the predetermined therapy are known. In an embodiment of the method, the profile is generated by counting how many cell centers are assigned to each of the classes of cell centers present in the image. In an alternative embodiment of the invention, the profile is generated based on a spatial distribution of cell centers assigned to various classes in the digital image.

Another embodiment of the method includes defining the classes of the cell centers using k-means clustering of feature vectors of cell centers detected in a plurality of digital images of tissue from a plurality of cancer patients.

According to another embodiment of the method, the convolutional neural network is a convolutional neural network selected from the group consisting of: a generative adversarial network (GAN), an information maximizing generative adversarial network (infoGAN), a boundary equilibrium generative adversarial network (BeGAN), and an autoencoder convolutional neural network.

In a preferred embodiment the tissue has been stained with a stain that stains cellular nuclei. Particularly preferred, the tissue has been stained using an antibody specific to a protein selected from the group consisting of: HER1, HER2, HER3, KI67, PD-L1, PD-L2, CD3, CD4, CD8, CD20, and CD73. In yet another embodiment the tissue has been immunohistochemically stained using hematoxylin and eosin.

According to yet another embodiment of the disclosed method, the convolutional neural network is a discriminator part of an infoGAN, and the classes of the cell centers are defined by performing an arg-max operation on output values of predefined network nodes of the convolutional neural network. Performing the arg-max operation involves determining the input value of each predefined network node that yields the maximum output value of the predefined network node. For a generator with four neurons in the predictor layer that represent four classes (e.g., A-D), a given cell center is classified in the class corresponding to the neuron having the largest activation value.

In another embodiment of the method, the spatial statistical analysis involves calculating a number of cells that have been assigned to a first class that are within a predefined maximum distance of cells that have been assigned to a second class.

In an embodiment of the method, extracting the image patch involves extracting a first image patch that includes the cell center and then extracting a second image patch that is smaller than the first image patch and centered on the same cell center.

In another embodiment of the method, the feature vector is generated based on an image patch using a convolutional neural network. The image patch is generated by stacking a first image patch and a second image patch. The first image patch is centered on a cell center, and the second image patch is generated by downscaling a third larger image patch to the size of the first image patch, wherein the third image patch is also centered on the cell center. The size of the third image patch is larger than the size of the first image patch.

In another embodiment of the method, the feature vector is generated based on an image patch using a convolutional neural network. The image patch is generated from a first image patch that includes a cell center. The method of generating the image patch is selected from the group consisting of: color space transformation, two dimensional Fourier transformation, Fourier-Bessel rotational invariant transformation, and Fourier Mellin Transform.

Another aspect of the disclosure concerns a method for computing a score for a cancer patient indicating a survival probability of the cancer patient.

In particular, the invention further relates to an *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;
- assigning a class to each cell center based on the feature vector associated with each cell center; and
- computing a score for the digital image of tissue by performing spatial statistical analysis on the classes of the cell centers, wherein the score is indicative of a survival probability of the cancer patient.

In this method, all feature disclosed in the preferred embodiments for the method of indicating of how the cancer patient will respond to a predetermined therapy can be used.

In a first step of the method, cell centers on a digital image of tissue of the cancer patient are detected, wherein the tissue has been stained, for example the tissue has been immunohistochemically stained to mark membranes or has been stained to mark cell nuclei. In a second step, each cell center is classified by extracting an image patch that includes the cell center. Subsequently, in a third step, image analysis is performed on each image patch using a convolutional neural network to generate a feature vector based on each image patch using the convolutional neural network. The feature vectors are then used to classify the cell centers. Then a profile is generated by spatial statistical analysis of the classified cell centers. Subsequently a score for the cancer patient is computed by comparing the profile to those of other patients to indicate a survival probability of the cancer patient. The profile is compared to existing profiles of patients whose survival probability is known.

In an embodiment of the method, the survival probability of the cancer patient is indicated. A profile is generated by classifying each feature vector using a database of Nc cluster analysis models. Alternatively, the step of generating the profile is performed based on how many cell centers are classified as belonging to a class. The convolutional neural network is a convolutional neural network selected from the group consisting of: a generative adversarial network (GAN), an information maximizing generative adversarial network (infoGAN), a boundary equilibrium generative adversarial network (BeGAN), and an autoencoder convolutional neural network.

In a preferred embodiment the tissue has been immunohistochemically stained to mark membranes.

In an embodiment of the method, extracting the image patch involves extracting a first image patch that includes the cell center and then extracting a second image patch that is larger than the first image patch and has a common center pixel with the first image patch. The spatial statistical analysis indicates a spatial distribution in the digital image of cell centers that have similar feature vectors. The profile is generated based on a spatial distribution in the digital image of feature vectors that share a common feature compared to other feature vectors that do not share the common feature.

Other embodiments and advantages are described in the detailed description below.

**Detailed description of the figures and the examples**

Reference will now be made in detail to some embodiments of the invention, examples of which are illustrated in the accompanying drawings.

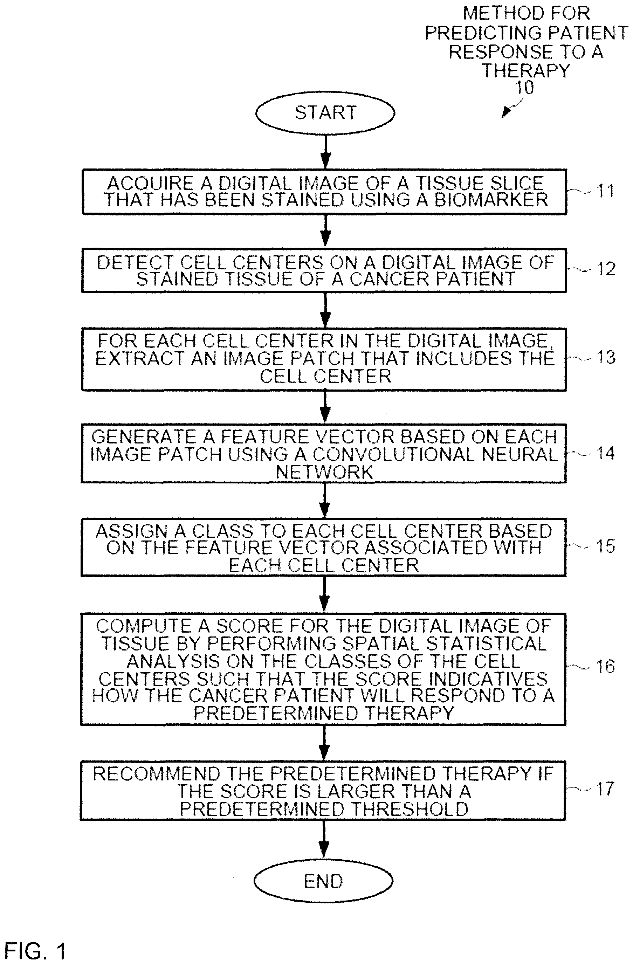

FIG. 1 is a flowchart of steps 11-17 of a method 10 by which an analysis system analyzes a digital image of tissue from a cancer patient and predicts how the cancer patient will likely respond to a predetermined therapy. In a first step 11, a high-resolution digital image is acquired of a tissue slice from the cancer patient that has been stained using one or more biomarkers or stains.

In step 12, cell centers are detected in the digital image of stained tissue of the cancer patient. In step 13, for each cell center in the digital image, an image patch is extracted that includes the cell center. In step 14, a feature vector is generated based on each image patch using a convolutional neural network. In step 15, a class is assigned to each cell center based on the feature vector associated with the cell center. In step 16, a score is computed for the digital image of tissue by performing spatial statistical analysis on the classes of the cell centers that are present in the digital image. The score is indicative of how the cancer patient will respond to a predetermined therapy. The spatial statistical analysis that is performed on the classes of cell centers generates a profile for the digital image. The score for the cancer patient is computed by comparing the profile for the digital image of the cancer patient with profiles generated from images of tissue from a plurality of other cancer patients whose responses to the predetermined therapy are known. In step 17, the predetermined therapy is recommended if the score is larger than a predetermined threshold.

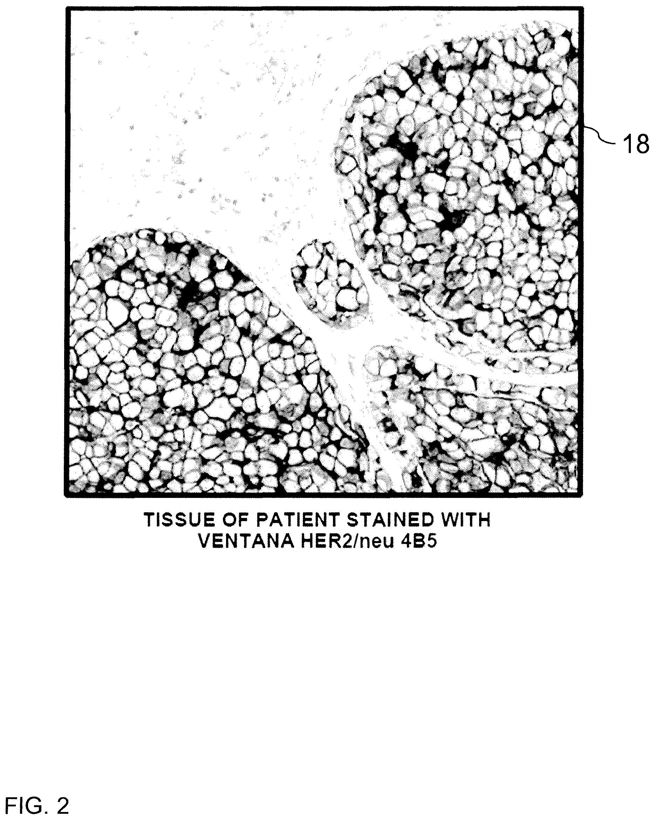

FIG. 2 is a digital image 18 of stained tissue that has been acquired in step 11. Image 18 shows tissue from a cancer patient that has been immunohistochemically stained with an anti-Her2/neu antibody. The anti-Her2/neu antibody binds to the membrane protein Her2/neu so that with a subsequent 3,3'-Diaminobenzidine (DAB) staining step the location of the protein Her2/neu in the tissue sample is visualized. In another embodiment, the tissue has been immunohistochemically stained using hematoxylin and eosin. In yet other embodiments, the tissue has been stained using an antibody specific to a selected protein, such as HER1, HER2, HER3, KI67, PD-L1, PD-L2, CD3, CD4, CD8, CD20 or CD73.

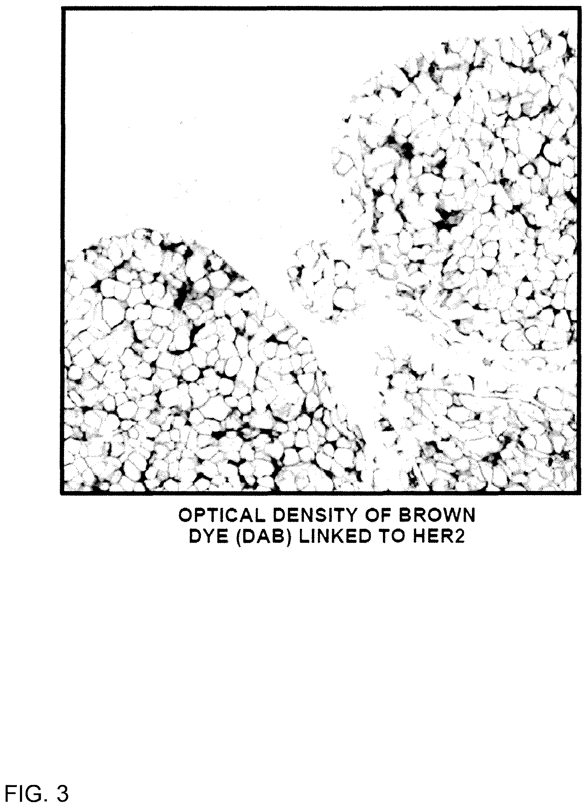

FIG. 3 is an image showing the optical density distribution of the DAB staining of the image of FIG. 2. Areas of intense DAB staining are dark in FIG. 3. Cell membranes are also apparent in FIG. 3.

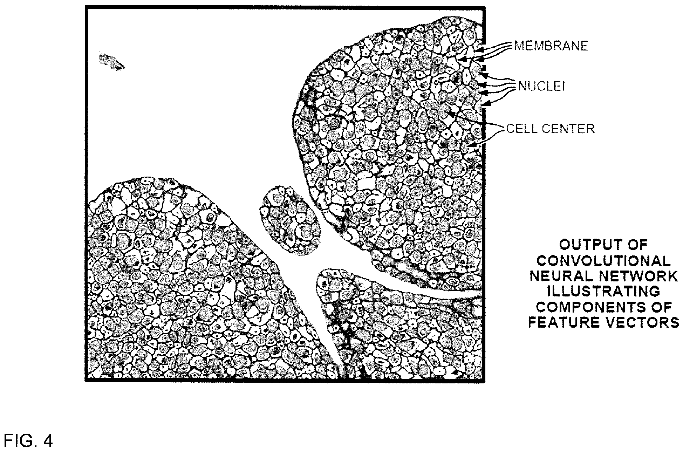

FIGS. 4-8 illustrate the image analysis performed on the image of FIG. 2 in step 12 in order to detect cell centers in the image. The image analysis of the image of FIG. 2 was performed by a convolutional neural network. The image of FIG. 4 has been segmented to show cell membranes, cell nuclei and cell centers within epithelial cells. Regions of non-epithelial cells appear as white in FIG. 4.

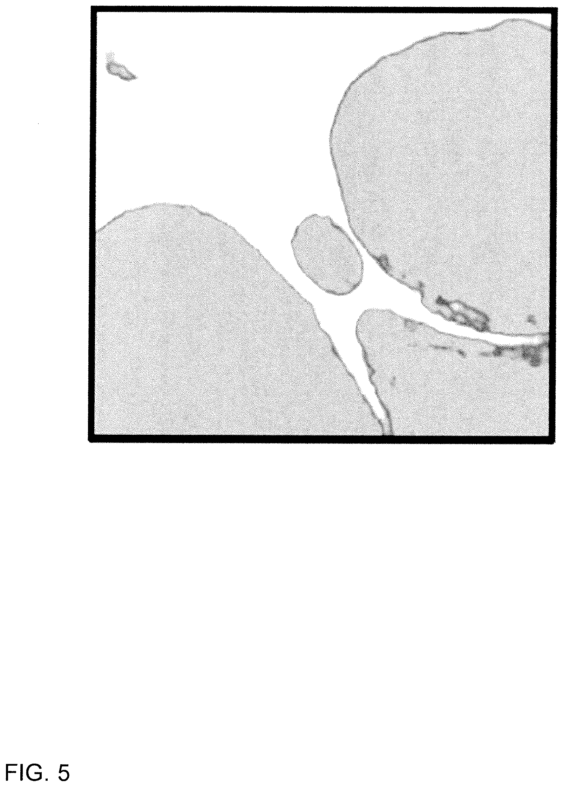

FIG. 5 is a segmented image of the tissue of FIG. 4 showing only epithelium as gray and non-epithelial tissue as white. The image shown in FIG. 5 represents the output of an image analysis step in which epithelial and non-epithelial cells are identified. The image shown in FIG. 5 represents one layer of information contained in the image of FIG. 4.

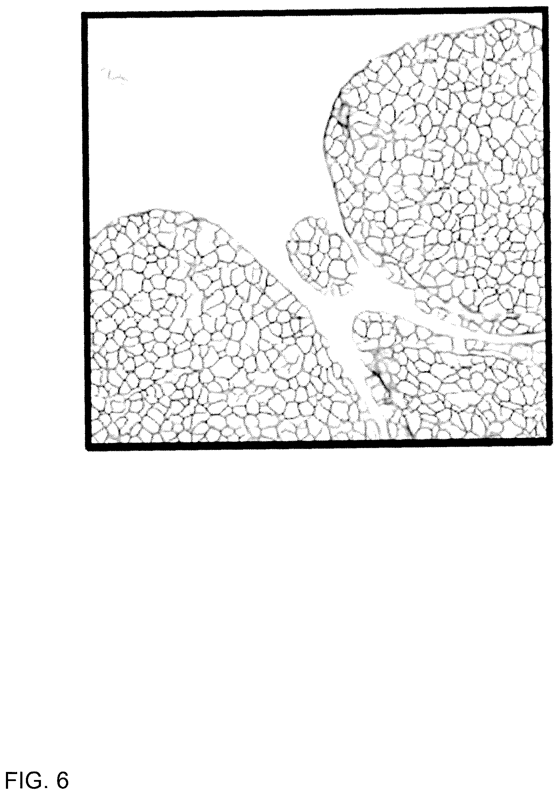

FIG. 6 is a segmented image showing cell membranes. Tissue other than the membranes appears as white. The image shown in FIG. 6 represents the output of another analysis step in which cell membranes are identified and distinguished from other tissue. The image of FIG. 6 represents one layer of information contained in the image of FIG. 4.

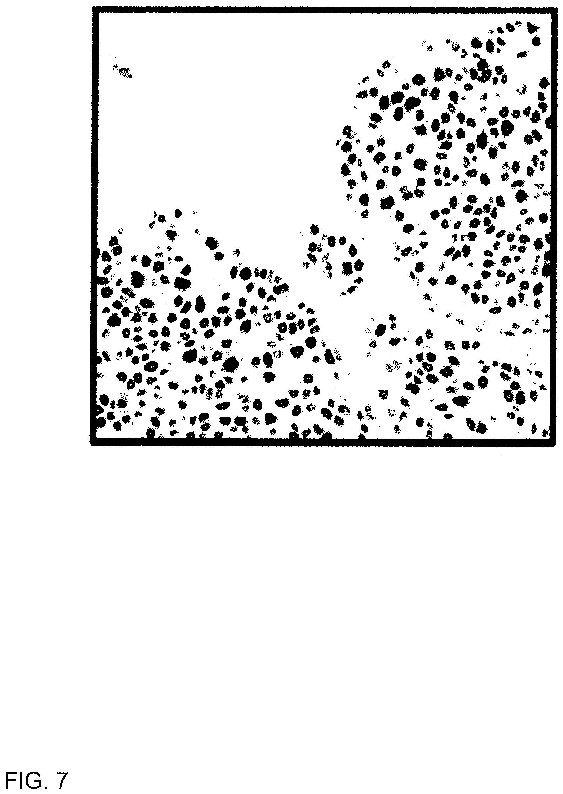

FIG. 7 is a segmented image showing cell nuclei; other tissue appears as white. The image of FIG. 7 represents the output of another analysis step in which cell nuclei are identified and distinguished from other tissue. The image of FIG. 7 represents one layer of information contained in the image of FIG. 4.

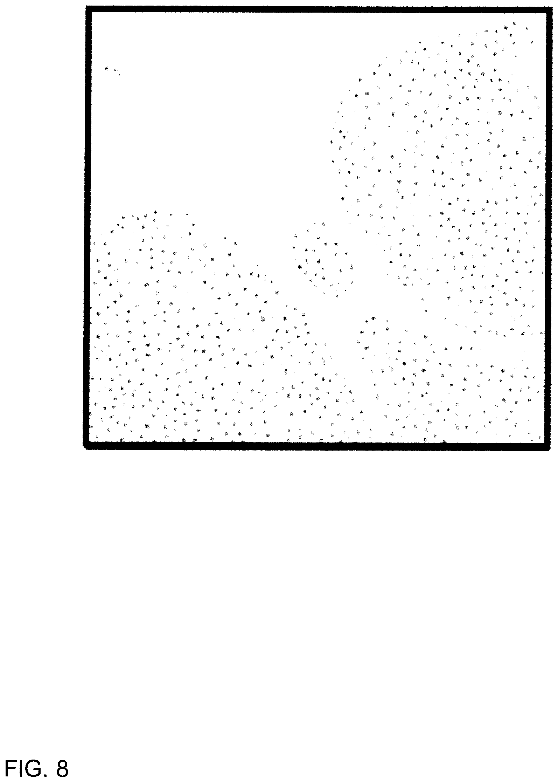

FIG. 8 is a segmented image showing cell centers; other tissue appears as white. The image of FIG. 8 represents the output of analysis step 12 in which cell centers are identified. In one embodiment of the method for indicating how a cancer patient will respond to a predetermined therapy, the cell centers are defined as the center of the area that has been identified as being the nucleus of a cell. In another embodiment, the cell centers are defined as the center of the area that has been identified as the area surrounded by a continuous membrane. The image of FIG. 8 represents one layer of information contained in the image of FIG. 4.

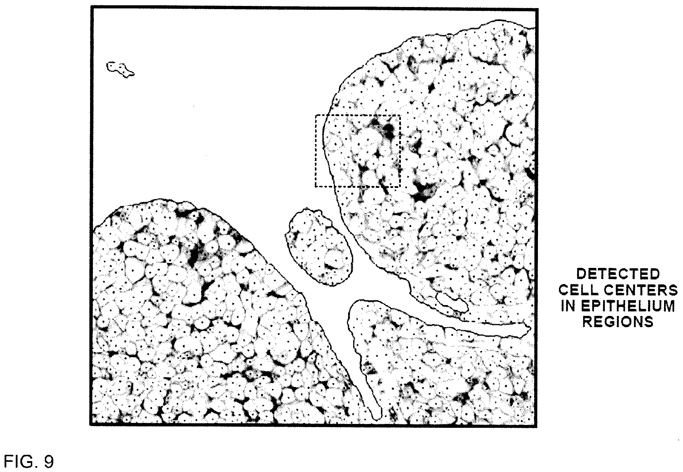

FIG. 9 shows the segmented image of FIG. 4 superimposed on the image of the stained tissue. Cell centers have been identified in the regions corresponding to epithelial cells.

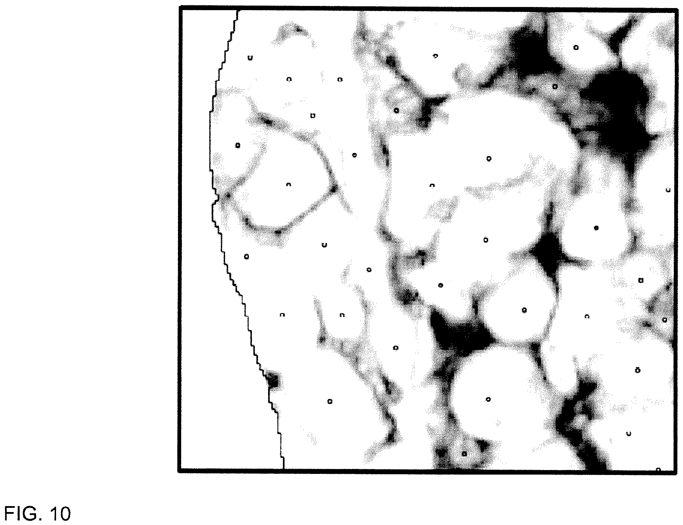

FIG. 10 is a more detailed view of the region in FIG. 9 enclosed by the dashed rectangle. In FIG. 9, the cell centers are defined as the center of each area in the image that has been identified as being surrounded by a continuous membrane. In FIG. 10, the membrane is dark, and the area within the membrane is light.

In step 13 of the method for indicating how a particular cancer patient will respond to a predetermined therapy, an image patch surrounding each cell center is extracted from the stained image of FIG. 2. In one embodiment, multiscale patches are used in which the patch is generated by superimposing multiple patches of different resolutions over one another. For example, a multiscale patch can be generated by combining a patch having a resolution of $64\mu m$ x $64\mu m$ with another patch having a resolution of $16\mu m$ x $16\mu m$.

In step 14, a convolutional neural network is used to generate a feature vector for each cell center by analyzing the associated multiscale patch. Thus, the features from the stained image at multiple resolutions are aggregated into an unsupervised feature vector.

In step 15, a class is assigned to each cell center based on the feature vector associated with that cell center. The classes are determined using cluster analysis models, such as k-means cluster analysis, to cluster the feature vectors of many cell centers from images of tissue from many cancer patients.

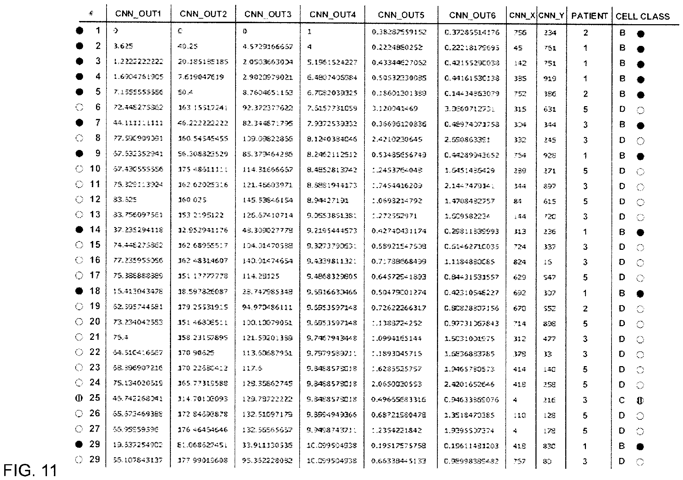

FIG. 11 shows an example of the clustering calculations of step 15 used to determine four classes of cells (A, B, C, D) using images of stained tissue from only five cancer patients. In an actual implementation, the cluster analysis should be trained on images of many more than just five cancer patients. The four classes of cell centers (A-D) are defined using the feature vector output by the convolutional neural network for each cell center as listed in the table in FIG. 11. FIG. 11 shows only the data for the first twenty nine of the cell centers from the five patients. Each feature vector has six components: cnn_out1, cnn_out2, cnn_out3, cnn_out4, cnn_out5, and cnn_out6. FIG. 11 lists the six components of the feature vector for the first twenty nine cell centers. The second-to-last column lists the patient associated with the numbered cell center. For example, as shown in line 3 of the table in FIG. 11, the cell center #3 of patient 1 (patient_id p1) has a feature vector with the six components (1.2222222222, 20.185185185, 2.0503663004, 5.1961524227, 0.43344627062, 0.42155290038) and has been classified by k-means clustering into class B (cell_classification).

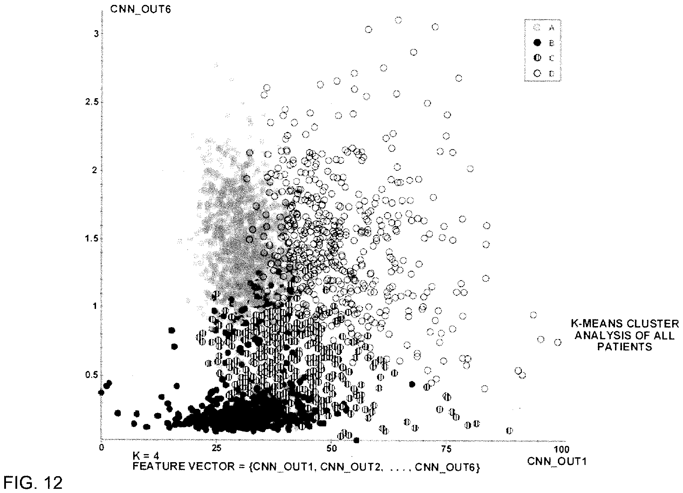

FIG. 12 is a plot illustrating the k-means cluster analysis in which the cell centers of the five patients are have been classified into one of four classes (A-D). For example, the black dots represent cell centers in class B, and the open circles represent cell centers in class D.

Using the cell center classifications obtained from cluster analysis, a class is assigned to each cell center in the stained image of the cancer patient based on the feature vector associated with that cell center. Consequently, each epithelial cell of the stained tissue of the cancer patient is classified as described above.

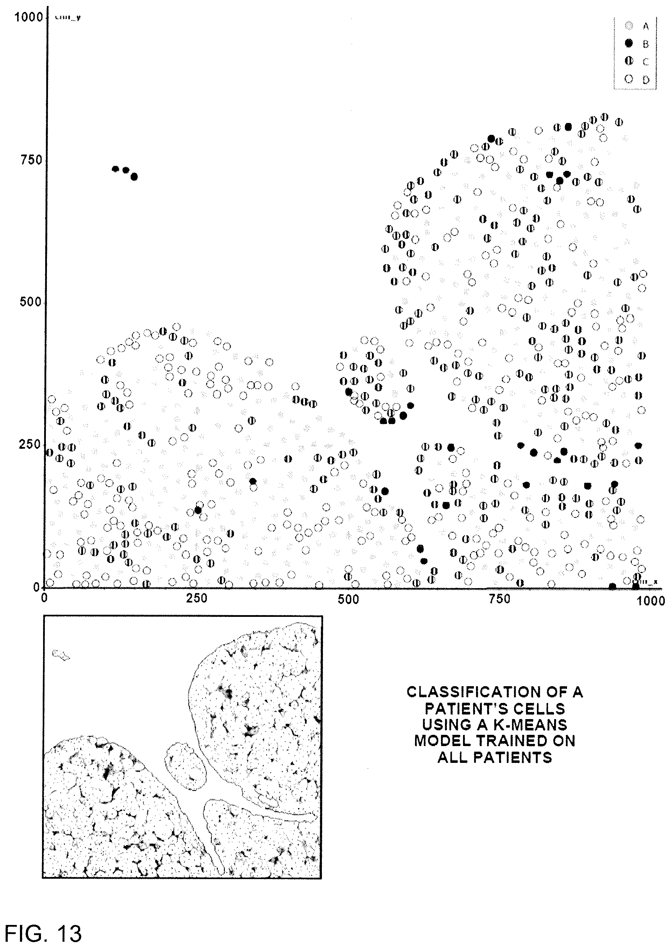

FIG. 13 illustrates how each epithelial cell of the stained tissue of the digital image of FIG. 2 is classified into one of the four classes A, B, C and D defined using k-means clustering. In FIG. 13, the gray dots represent cells in class A, the black dots represent cells in class B, the striped dots represent cells in class C, and the circles represent cells in class D.

In step 16 of the method for indicating how a particular cancer patient will respond to a predetermined therapy, a score is computed for the digital image 18 of tissue from the cancer patient by performing spatial statistical analysis on the classes of the cell centers. The spatial statistical analysis is used to generate a profile for the digital image 18. The score for the cancer patient is then computed by comparing the profile for the digital image of the cancer patient with profiles generated from images of tissue from many other patients whose responses to the predetermined therapy are known.

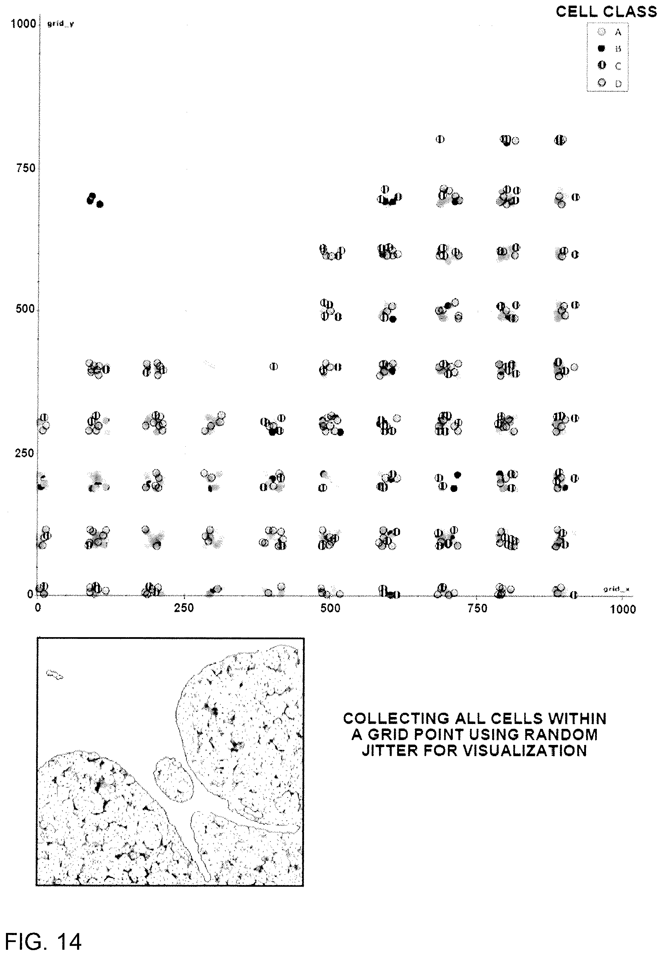

One way to generate the profile for the digital image is simply to count how many cell centers are assigned to each of the classes of cell centers. Another way to generate the profile for the digital image is based on the spatial distribution of the classified cell centers in the digital image. For this example, the profile is defined by how many cell centers are assigned to a first class for which at least a predefined number of cell centers that are assigned to a second class are located closer than a predefined distance to the cell centers assigned to the first class. FIGS. 14-16 illustrate alternative ways to generate a profile from a digital image of cancer tissue that can be used to indicate how the cancer patient will respond to a predetermined therapy.

FIG. 14 shows a random jitter scatter plot used to visualize the distribution of cell centers classified into classes A-D within a defined area of a grid overlaying the digital image of FIG. 13. As shown in FIG. 14, within each grid area cell centers falling within this area are grouped with adjacent cell centers. In the example of FIG. 14, per grid area, four subgroups within the grid area are formed in addition to another five subgroups on the border to the adjacent grid areas. The four classes are designated by dots in FIG. 14 in the same manner as illustrated in FIG. 13 (gray, black, striped, circle). Cells classified in the same class within a grid area are counted. For example, the grid area in the upper right corner of FIG. 14 contains one cell center in class A, no cell centers in class B, three cell centers in class C, and two cell centers in class D. The scatter plot of FIG. 14 allows the predominant class of cell present within a grid area to be easily recognize.

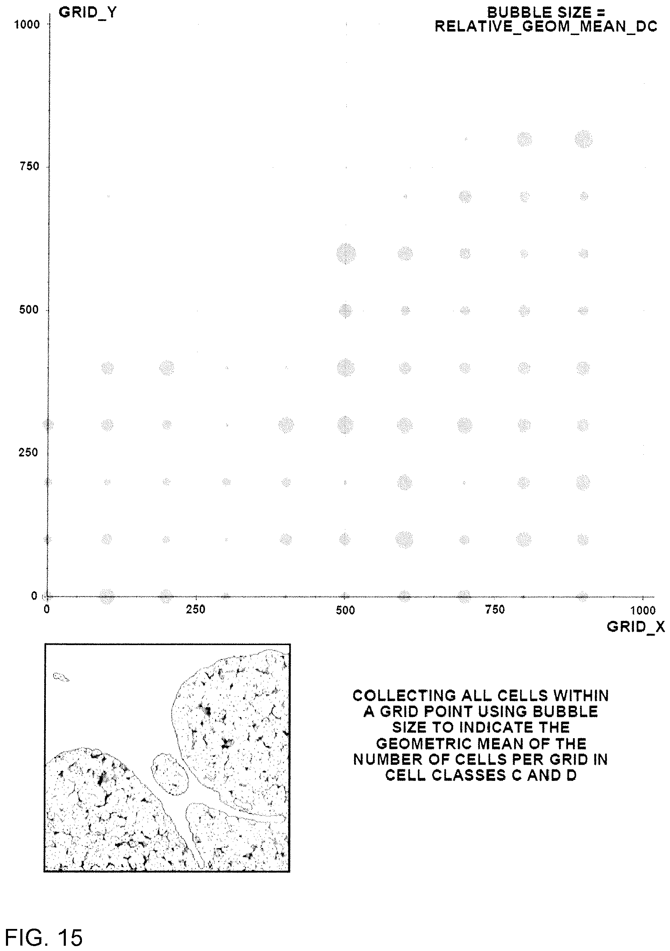

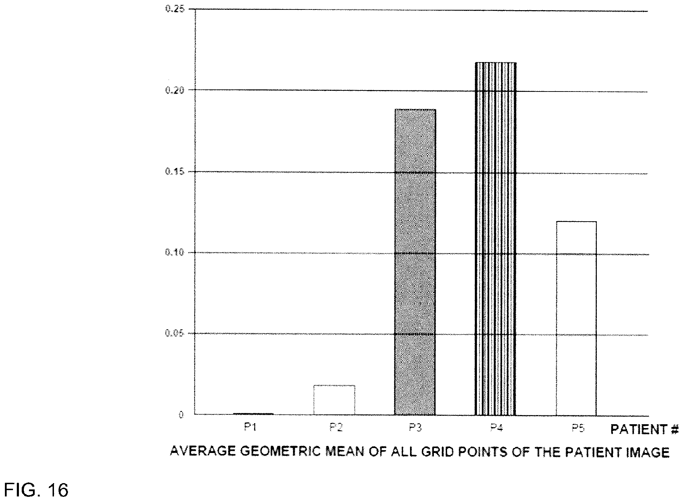

FIG. 15 shows a quantification graph used to visualize the number of cell centers classified to a group within each grid area. The sizes of the bubbles in the graph correspond to the geometric mean of the number of cells classified to specific class. In the example of FIG. 15, the bubble size corresponds to the geometric mean of the number of cell centers in a given area that have been classified into only classes C and D. A bubble with a larger diameter indicates a larger average number of cells in classes C and D in the area surrounding the bubble. For each patient, spatial statistical analysis as shown in the examples of FIGS. 14-15 is carried out to determine a score indicative of the patient's response to treatment. FIG. 16 shows an example of a score that is calculated to indicate a patient's response to a particular treatment. In this example, the score is the mean value of the geometric mean of the number of cell centers classified in classes C and D per grid area of the digital image of tissue of the patient.

In the example of FIG. 16, the predictive accuracy of the score was trained on only five patients whose responses to the predetermined therapy are known. In an actual implementation, the predictive accuracy of the score should be trained on images of many more than just five cancer patients whose outcome after administering the therapy is known. In the example of FIG. 16, the digital image of tissue from patient 4 (P4) generated an average geometric mean of the number of cell centers in classes C and D per grid area of 0.21767878042528. For patient 3 (P3) the average geometric mean of the number of cell centers in classes C and D per grid area was 0.18867317404639. For patient 5 (P5) the average geometric mean was 0.12066538018773.

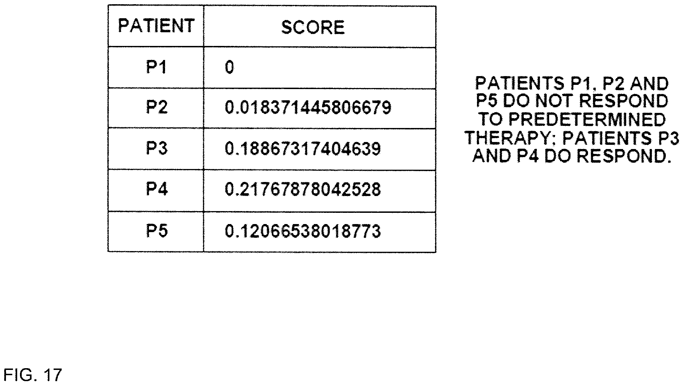

FIG. 17 provides an overview of the data shown in the chart of FIG. 16. It is known that patients 3 and 4 responded to the predetermined therapy, whereas patients 1, 2 and 5 did not respond to the predetermined therapy. Therefore, the average geometric mean of the number of cell centers in classes C and D per grid area can be used as a score to indicate how the particular cancer patient with the stained tissue of FIG. 2 will respond to the predetermined therapy. For the cancer patient with the stained tissue of FIG. 2, which resulted in the spatial statistical analysis illustrated in FIG. 15, the average geometric mean of the number of cell centers in classes C and D per grid area was 0.19. This score of 0.19 indicates that the cancer patient will probably respond to the predetermined therapy because 0.19 is similar to the score of patient 3 of 0.189 and the score of patent 4 of 0.218, both of which responded to the therapy.

In step 17 of the method, the predetermined therapy is recommended to the cancer patient if the score is larger than a predetermined threshold, such as 0.175, for example.

In another embodiment of the method for indicating how a particular cancer patient will respond to a predetermined therapy, the convolutional neural network is a discriminator part of an information maximizing generative adversarial network (infoGAN), and the classes of the cell centers are defined by performing an arg-max operation on output values of predefined network nodes of the convolutional neural network. Performing the arg-max operation involves determining the input value (argument) of each predefined network node that gives rise to a maximum output value of the predefined network node. For example, if a generator has four neurons (network nodes) in the predictor layer representing four classes, a given cell center is classified in the class corresponding to the neuron having the largest activation value. The four neurons (e.g., N1-N4) in the predictor layer of the generator represent the four classes A-D. For example, the inputs for an exemplary cell center generate the activation values 0.1, 0.2, 0.15 and 0.01 in neurons N1-N4, respectively. The maximum activation value is 0.2 in neuron N2, which represents class B. Thus, the exemplary cell center is classified in class B.

Further disclosed are methods as defined by the following clauses:

17. A method for recommending a treatment of a cancer patient, comprising the steps:

a) detecting nuclei centers on a digital tissue image, wherein the digital tissue image was generated by scanning a cancer patient's tissue sample stained with a nuclear biomarker;
b) classifying each nucleus center by extracting at least two image patches around the nucleus center position, analyzing the two image patches using a convolutional neural network, using the activation values of a layer of the convolutional neural network as a feature vector, and classifying the feature vector using a database of Nc cluster analysis models, wherein each cluster analysis model represents a cell phenotype;
c) generating a Nc -dimensional patient profile by counting the number of occurrences of nuclei centers that are associated with each class;
d) computing a score using a classification of the profile that is indicative on how the patient will respond to the therapy, wherein the classification of the profile uses information from a database including patient profiles with known responses to the treatment; and
e) recommending the treatment if the score is larger than a predefined threshold.

18. A method comprising:

- detecting nuclei centers on a digital image of tissue of a cancer patient, wherein the tissue is stained with a nuclear biomarker;
- classifying each nucleus center by extracting at least two image patches near the nucleus center;
- analyzing the two image patches using a convolutional neural network;
- using activation values of a layer of the convolutional neural network to generate a feature vector;
- classifying the feature vector using a database of Nc cluster analysis models, wherein each cluster analysis model represents a cell phenotype;
- generating a Nc dimensional patient profile by counting a number of occurrences of nuclei centers that are associated with each class;
- computing a score using a classification of the profile that is indicative of how the cancer patient will respond to the therapy, wherein the classification of the profile uses information from a database comprising patient profiles with known responses to the treatment; and
- recommending the treatment if the score is larger than a predefined threshold.

An oncologist's recommendation to treat a patient with a therapy is frequently based on a histopathological score derived from the patient's cancer tissue, such as the Gleason Score for prostate cancer or the HERCEPTIN HER2 immunohistochemistry score for breast cancers. These established scoring methods rely on the classification of cells into visually defined classes, such as HER2-positive tumor cells, or normal epithelial cells. The method presented here automatically derives cell classes by applying an unsupervised convolutional network method to image patches extracted from automatically detected nuclei center locations in digital tissue images. A statistics on the count of the detected nuclei assigned to the automatically found classes is the basis for a novel scoring method which is used to determine the recommendation to apply a treatment to the cancer patient.

Methods

Generation of a database of cell phenotypes characterized by cluster analysis models (CAMs) derived from a convolutional neural network (CNN) layer

The database of cell phenotypes comprises a set of Nc cluster analysis models (CAMs), each representing a cell phenotype class. The cluster analysis models are generated by clustering the feature vectors generated by a CNN into Nc classes. The parameter Nc may be predefined, such as Nc=256 in a use case with the k-Means clustering algorithm, or dependent on the distance metrics between the feature vectors in connectivity based clustering methods.

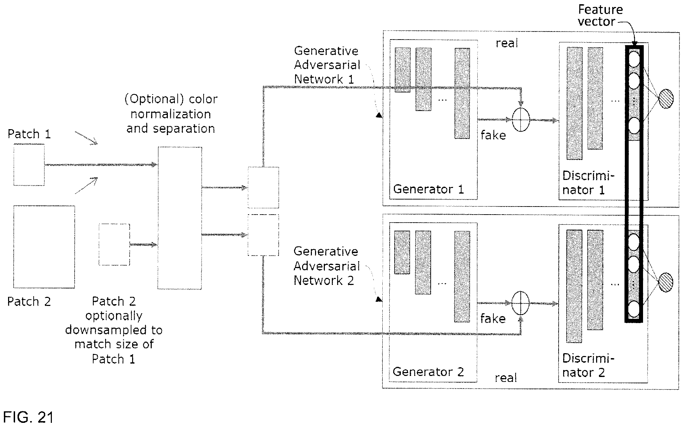

To generate the feature vectors, a CNN is trained using a Generative Adversarial Network (GAN) CNN architecture (FIG. 21). Within the GAN training, a Generator creates increasingly realistic artificial image patches ("fake" images), and a Discriminator simultaneously optimizes itself to discriminate between these fake images patches and "real" images. The desired feature vectors are equivalent to the output of last convolutional network layer of this GAN model after the training phase.

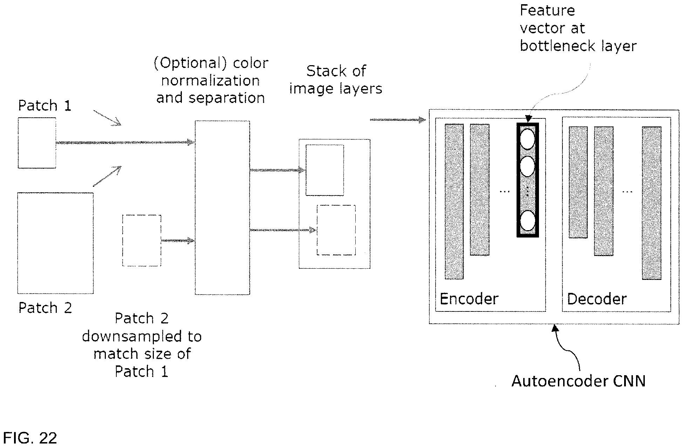

Another implementation comprises the use of a convolutional neural network autoencoder (FIG. 22) which consists of two parts, an Encoder which generates a feature vectors in its output neural network layer using training image patches, and a Decoder which is capable to generate artificial image patches using the feature vector. The autoencoders loss function is determined by the difference between the input image and its decoded representation.

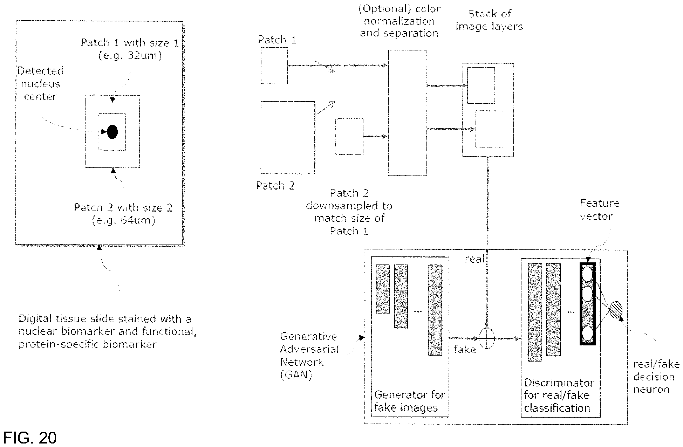

The image patches used to train the CNN model (either GAN or autoencoder) are generated by cropping quadratic regions of digital tissue slides around detected nuclei centers (Fig 20 left). To capture simultaneously the nuclear morphology and the cellular context, two image regions are cropped, a small region 1, typically in the range of 32um, and a larger region 2, typically 64um or 128um. The larger region is then down-sampled to the size of the smaller region, so that both regions could be stacked. The stacked image comprises twice the number of image channels of the whole slide image.

In case of chromogenic immunohistochemistry and H&E whole slide images the number of image channels in the digital image is 3 (red, green, blue). In case of immunofluorescence or imaging cytometry the number of image channels in the digital images is in the range between 4 and 50. An automated image processing could be applied on the extracted patches to compensate for illumination artifacts, staining variations from sample preparation and slide staining, and to transfer the original image colors to another color space which is adapted to the dyes used in the staining process. In particular, those color spaces are relevant which separate the nuclear biomarker information from the functional biomarker (or biomarkers). Examples for nuclear biomarkers are hematoxylin, DAPI, Hoechst. Examples for functional biomarkers are antibodies targeting HER2, Estrogen and Progesterone receptors, PD-L1, PD-1, CTLA-4, CD8, CD3, CD4, CD20, CD68, CD163.

The cell centers are detected using an automated image analysis method based on machine learning. The preferable method is a visual context random forest models trained by nucleus center annotations provided by domain experts (N. Brieu, G. Schmidt. Learning Size Adaptive Local Maxima Selection For Robust Nuclei Detection in Histopathology Images, ISBI 2017). Another method for cell center detection involves direct segmentation of nuclei using a convolutional neural network and computation of cell centers using the center of gravity of the detected nuclei.

Recommending a therapy treatment for a cancer patient using a database of CAMs

To generate a score for the cancer patient's tissue sample which is indicative for optimal treatment, the tissue has to be sectioned, stained using a nuclear biomarker, digitized using a digital slide scanner, and analyzed by the method described in the following section.

Nuclei centers are detected by applying a pre-trained random forest model to all pixels of a region of interest of the digital tissue image. The region may comprise the whole tissue region, or a polygonal delineated region marked by a pathologist, such as the tumor center. Each detected nucleus center is classified according to the phenotype classes stored in the CAMs database. A statistical profile is generated on the relative count of cells belong to class 1, class 2, ... class Nc. The tissue profile is matched with profiles stored in a database for previously seen patients with known therapy success. A score for a given therapy is computed by measuring the distance from the patient's profile to the profiles in the database which has been shown to respond to that therapy. If the score is greater than a predefined threshold, then that therapy is recommended. The score may be inversely related to the distance to the M nearest neighbors in the database of patient profiles. M=3 is recommended. In another implementation, the classification of the nuclei centers is refined after initial classification according to the initial classification of the nuclei in the vicinity. One option is to choose a circular vicinity of 120um around the nucleus center. For example, for a given nucleus with initial classification to class 1 its classification will be amended to class 1' if there are is at least one other nuclei with class 2 in its vicinity. The patient's tissue profile is then generated using the amended classes.

## References

Brieu, N and Schmidt, G., Learning Size Adaptive Local Maxima Selection for Robust Nuclei Detection in Histopathology Images, ISBI (2017)

Brieu, N. et al., Augmenting TNM Staging with Machine Learning-based Immune Profiling for Improved Prognosis Prediction in Muscle-Invasive Bladder Cancer Patients, ESMO (2018)

Harder, N. et al., Tissue Phenomics for prognostic biomarker discovery in low- and intermediate-risk prostate cancer, Scientific Report (2018)

Kapil. A. et al., Deep Semi Supervised Generative Learning for Automated Tumor Proportion Scoring on NSCLC Tissue Needle biopsies, Scientific Report (2018)

Meier, A. and Nekolla, K. End-to-end learning using convolutional neural networks to predict survival in patients with gastric cancer, Pathology Visions (2018)

Meier, A. and Schmidt, G. Tumor Infiltrating Lymphocytes based Survival Analysis in Colorectal Cancer Stage II, H&E Slide , DGP (2018)

Vandenberghe, M. E. et al., Relevance of deep learning to facilitate the diagnosis of HER2 status in breast cancer, Sci Rep 7, 45938 (2017)

## Claims

**1.** An *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;

- assigning a class to each cell center based on the feature vector associated with each cell center; and
- computing a score for the digital image of tissue by performing spatial statistical analysis on the classes of the cell centers, wherein the score is indicative of how the cancer patient will respond to a predetermined therapy.

2. The method of claim 1, wherein the spatial statistical analysis performed on the classes of the cell centers generates a profile for the digital image, and wherein the score for the cancer patient is computed by comparing the profile for the digital image of the cancer patient with profiles generated from images of tissue from a plurality of patients whose responses to the predetermined therapy are known.

3. The method of claim 1 or 2, wherein the classes of the cell centers are defined using k-means clustering of feature vectors of cell centers detected in a plurality of digital images of tissue from a plurality of cancer patients.

4. The method of any of claims 1 to 3, wherein the convolutional neural network is a discriminator part of an information maximizing generative adversarial network (infoGAN), and wherein the classes of the cell centers are defined by performing an arg-max operation on output values of predefined network nodes of the convolutional neural network.

5. The method of any of claims 1 to 4, wherein the spatial statistical analysis involves calculating a number of cells that have been assigned to a first class that are within a predefined maximum distance of cells that have been assigned to a second class.

6. The method of any of claims 1 to 5, wherein the convolutional neural network is a convolutional neural network selected from the group consisting of: a generative adversarial network (GAN), an information maximizing generative adversarial network (infoGAN), a boundary equilibrium generative adversarial network (BeGAN), and an autoencoder convolutional neural network.

7. The method of any of claims 1 to 6, wherein the tissue has been stained with a stain that stains cellular nuclei, preferably the tissue has been stained using an antibody specific to a protein selected from the group consisting of: HER1, HER2, HER3, KI67, PD-L1, PD-L2, CD3, CD4, CD8, CD20, and CD73 and/or wherein the tissue preferably has been immunohistochemically stained using hematoxylin and eosin.

8. The method of any of claims 1 to 7, wherein the extracting the image patch involves extracting a first image patch that includes the cell center and then extracting a second image patch that is smaller than the first image patch and centered on the cell center.

9. The method of any of claims 2 to 8, wherein the profile is generated by counting how many cell centers are assigned to each of the classes and/or wherein the profile is generated based on a spatial distribution in the digital image of how many cell centers are assigned to a first class for which at least a predefined number of cell centers that are assigned to a second class are located closer than a predefined distance to the cell centers assigned to the first class.

10. An *in vitro* method comprising:

- detecting cell centers on a digital image of tissue of a cancer patient, wherein the tissue has been stained;
- for each cell center, extracting an image patch that includes the cell center;
- generating a feature vector based on each image patch using a convolutional neural network;
- assigning a class to each cell center based on the feature vector associated with each cell center; and
- computing a score for the digital image of tissue by performing spatial statistical analysis on the classes of the cell centers, wherein the score is indicative of a survival probability of the cancer patient.

11. The method of claim 10, wherein the spatial statistical analysis performed on the classes of the cell centers generates a profile for the digital image, and wherein the score for the cancer patient is computed by comparing the profile for the digital image of the cancer patient with profiles generated from images of tissue from a plurality of patients whose survival probability is known.

12. The method of claim 10 or 11, wherein the generating the profile is performed based on how many feature vectors are classified as belonging to a class.

13. The method of any of claims 10 to 12, wherein the convolutional neural network is a convolutional neural network selected from the group consisting of: a generative adversarial network (GAN), an information maximizing generative adversarial network (infoGAN), a boundary equilibrium generative adversarial network (BeGAN), and an autoencoder convolutional neural network.

14. The method of any of claims 10 to 13, wherein the extracting the image patch involves extracting a first image patch that includes the cell center and then extracting a second image patch that is larger than the first image patch and has a common center pixel with the first image patch.

15. The method of any of claims 10 to 14, wherein the spatial statistical analysis indicates a spatial distribution in the digital image of cell centers that have similar feature vectors.

16. The method of any of claims 10 to 15, wherein the profile is generated based on a spatial distribution in the digital image of feature vectors that share a common feature compared to other feature vectors that do not share the common feature.

METHOD FOR
PREDICTING PATIENT
RESPONSE TO A
THERAPY
10

```
        ( START )
           │
           ▼
┌──────────────────────────────────────┐
│ ACQUIRE A DIGITAL IMAGE OF A TISSUE   │
│ SLICE THAT HAS BEEN STAINED USING A   │── 11
│ BIOMARKER                             │
└──────────────────────────────────────┘
           │
           ▼
┌──────────────────────────────────────┐
│ DETECT CELL CENTERS ON A DIGITAL      │
│ IMAGE OF STAINED TISSUE OF A CANCER   │── 12
│ PATIENT                               │
└──────────────────────────────────────┘
           │
           ▼
┌──────────────────────────────────────┐
│ FOR EACH CELL CENTER IN THE DIGITAL   │
│ IMAGE, EXTRACT AN IMAGE PATCH THAT    │── 13
│ INCLUDES THE CELL CENTER              │
└──────────────────────────────────────┘
           │
           ▼
┌──────────────────────────────────────┐
│ GENERATE A FEATURE VECTOR BASED ON    │
│ EACH IMAGE PATCH USING A              │── 14
│ CONVOLUTIONAL NEURAL NETWORK          │
└──────────────────────────────────────┘
           │
           ▼
┌──────────────────────────────────────┐
│ ASSIGN A CLASS TO EACH CELL CENTER    │
│ BASED ON THE FEATURE VECTOR           │── 15
│ ASSOCIATED WITH EACH CELL CENTER      │
└──────────────────────────────────────┘
           │
           ▼
┌──────────────────────────────────────┐
│ COMPUTE A SCORE FOR THE DIGITAL IMAGE │
│ OF TISSUE BY PERFORMING SPATIAL       │
│ STATISTICAL ANALYSIS ON THE CLASSES   │
│ OF THE CELL CENTERS SUCH THAT THE     │── 16
│ SCORE INDICATIVES HOW THE CANCER      │
│ PATIENT WILL RESPOND TO A             │
│ PREDETERMINED THERAPY                 │
└──────────────────────────────────────┘
           │
           ▼
┌──────────────────────────────────────┐
│ RECOMMEND THE PREDETERMINED THERAPY   │
│ IF THE SCORE IS LARGER THAN A         │── 17
│ PREDETERMINED THRESHOLD               │
└──────────────────────────────────────┘
           │
           ▼
        ( END )
```

FIG. 1

TISSUE OF PATIENT STAINED WITH
VENTANA HER2/neu 4B5

FIG. 2

OPTICAL DENSITY OF BROWN
DYE (DAB) LINKED TO HER2

FIG. 3

MEMBRANE

NUCLEI

CELL CENTER

OUTPUT OF
CONVOLUTIONAL
NEURAL NETWORK
ILLUSTRATING
COMPONENTS OF
FEATURE VECTORS

FIG. 4

EP 3 663 979 A1

FIG. 5

17

FIG. 6

FIG. 7

FIG. 8

DETECTED
CELL CENTERS
IN EPITHELIUM
REGIONS

FIG. 9

FIG. 10

| | # | CNN_OUT1 | CNN_OUT2 | CNN_OUT3 | CNN_OUT4 | CNN_OUT5 | CNN_OUT6 | CNN_X | CNN_Y | PATIENT | CELL CLASS | |
|---|---|---|---|---|---|---|---|---|---|---|---|---|
| ● | 1 | 0 | 0 | 0 | 1 | 0.38287559152 | 0.37285514176 | 756 | 234 | 2 | B | ● |
| ● | 2 | 3.625 | 40.25 | 4.5729166667 | 4 | 0.2224860252 | 0.22218179695 | 45 | 751 | 1 | B | ● |
| ● | 3 | 1.2222222222 | 20.185185185 | 2.0503663004 | 5.1961524227 | 0.43344627062 | 0.42155290038 | 142 | 751 | 1 | B | ● |
| ● | 4 | 1.6904761905 | 7.619047619 | 2.9020976021 | 6.4807406084 | 0.50532330085 | 0.4416153C138 | 385 | 919 | 1 | B | ● |
| ● | 5 | 7.1555555556 | 50.4 | 8.7604651153 | 6.7082039325 | 0.18601301389 | 0.14434863079 | 752 | 386 | 2 | B | ● |
| ○ | 6 | 72.448275862 | 163.15517241 | 92.372377622 | 7.5157731059 | 3.120041469 | 3.0660712751 | 315 | 631 | 5 | D | ○ |
| ● | 7 | 44.111111111 | 46.222222222 | 82.344871796 | 7.9372539332 | 0.36636120836 | 0.48974371758 | 304 | 344 | 3 | B | ● |
| ○ | 8 | 77.590909091 | 160.54545455 | 109.69822856 | 8.1240384046 | 2.4210230645 | 2.690863391 | 332 | 245 | 3 | D | ○ |
| ● | 9 | 57.532352941 | 56.308823529 | 85.373464286 | 8.2462112512 | 0.53485656748 | 0.44289943652 | 754 | 928 | 1 | B | ● |
| ○ | 10 | 67.430555556 | 175.48611111 | 114.31666667 | 8.4852813742 | 1.2453764048 | 1.6451486429 | 289 | 271 | 5 | D | ○ |
| ○ | 11 | 75.829113924 | 162.62025316 | 121.46603971 | 8.6881944173 | 1.7454916209 | 2.144747934 | 344 | 897 | 3 | D | ○ |
| ○ | 12 | 83.625 | 160.025 | 145.53646154 | 8.94427191 | 1.0693214792 | 1.4708492757 | 84 | 615 | 5 | D | ○ |
| ○ | 13 | 83.756097561 | 153.2195122 | 126.67410714 | 9.0553851381 | 1.272552971 | 1.509582234 | 144 | 720 | 3 | D | ○ |
| ● | 14 | 37.235294118 | 32.952941176 | 43.309027778 | 9.2195444573 | 0.42740431174 | 0.29811538993 | 313 | 236 | 1 | B | ● |
| ○ | 15 | 74.448275862 | 162.68955517 | 104.31470588 | 9.3273790631 | 0.58921547508 | 0.5146271C039 | 724 | 337 | 3 | D | ○ |
| ○ | 16 | 77.235955056 | 162.48314607 | 140.01474654 | 9.4339811321 | 0.71738668499 | 1.1184880C85 | 824 | 16 | 3 | D | ○ |
| ○ | 17 | 75.388888889 | 151.17777778 | 114.28125 | 9.4868329805 | 0.64572541803 | 0.84431531557 | 629 | 547 | 5 | D | ○ |
| ● | 18 | 15.413043478 | 18.597826087 | 23.747985348 | 9.5516630466 | 0.50479001274 | 0.42310546227 | 692 | 307 | 1 | B | ● |
| ○ | 19 | 62.395744681 | 179.25531915 | 94.970486111 | 9.5953597148 | 0.72622266317 | 0.90828907156 | 670 | 552 | 2 | D | ○ |
| ○ | 20 | 73.234042553 | 151.46306511 | 130.10079051 | 9.5953597148 | 1.1388724252 | 0.97731062843 | 714 | 898 | 5 | D | ○ |
| ○ | 21 | 75.4 | 158.23157899 | 121.59201389 | 9.7467943448 | 1.0994165144 | 1.5031001975 | 312 | 477 | 3 | D | ○ |
| ○ | 22 | 64.510416667 | 170.90625 | 113.60687961 | 9.7579589711 | 1.1893045715 | 1.5836883785 | 379 | 13 | 3 | D | ○ |
| ○ | 23 | 68.896907216 | 170.22580412 | 117.6 | 9.8488573018 | 1.6285525757 | 1.9465790573 | 414 | 140 | 5 | D | ○ |
| ○ | 24 | 75.134020619 | 165.77319588 | 129.35862745 | 9.8488573018 | 2.0650030553 | 2.4201652646 | 418 | 258 | 5 | D | ○ |
| ◑ | 25 | 46.742268041 | 314.70103093 | 129.79722222 | 9.8488573018 | 0.49665683316 | 0.94633869076 | 4 | 216 | 3 | C | ◑ |
| ○ | 26 | 65.573469388 | 172.84693878 | 132.51097179 | 9.8964949366 | 0.68721580478 | 1.3518470385 | 110 | 128 | 5 | D | ○ |
| ○ | 27 | 66.95959396 | 176.46454646 | 132.56565657 | 9.9468743711 | 1.2354221842 | 1.9395507374 | 4 | 179 | 5 | D | ○ |
| ● | 29 | 19.537254902 | 81.068662451 | 33.911130535 | 10.099504938 | 0.19517575758 | 0.19611481203 | 418 | 830 | 1 | B | ● |
| ○ | 29 | 55.107843137 | 177.99019608 | 95.352228062 | 10.099504938 | 0.6633844513 | 0.9998395482 | 757 | 80 | 3 | D | ○ |

FIG. 11

FIG. 12

CLASSIFICATION OF A
PATIENT'S CELLS
USING A K-MEANS
MODEL TRAINED ON
ALL PATIENTS

FIG. 13

COLLECTING ALL CELLS WITHIN
A GRID POINT USING RANDOM
JITTER FOR VISUALIZATION

FIG. 14

COLLECTING ALL CELLS WITHIN A GRID POINT USING BUBBLE SIZE TO INDICATE THE GEOMETRIC MEAN OF THE NUMBER OF CELLS PER GRID IN CELL CLASSES C AND D

FIG. 15

AVERAGE GEOMETRIC MEAN OF ALL GRID POINTS OF THE PATIENT IMAGE

FIG. 16

| PATIENT | SCORE |
|---------|-------|
| P1 | 0 |
| P2 | 0.018371445806679 |
| P3 | 0.18867317404639 |
| P4 | 0.21767878042528 |
| P5 | 0.12066538018773 |

PATIENTS P1, P2 AND P5 DO NOT RESPOND TO PREDETERMINED THERAPY; PATIENTS P3 AND P4 DO RESPOND.

FIG. 17

Digital tissue slide
stained with a nuclear
biomarker and
functional, protein-
specific biomarker

Detect cell nucleus centers using information from
the nuclear stain

Generate multiscale patches centered at detected
nucleus centers

Generate feature vectors for the multiscale
patches using a CNN

Generate models (CAMs) describing $N_c$ phenotype
classes in the feature vector space

Store CAMs in a database

Database of
CMAs

FIG. 18

Digital
tissue slide ————————→ Detect cell nucleus centers using information from
the nuclear stain

Section tissue
sample, stain and
digitize tissue
section comprising
patient's cancer
tissue

For each nucleus center, generate associated
multiscale patches centered at nucleus center

Generate a feature vector for each nucleus center
by analyzing the associated multiscale patches by
using a portion of the CNN

Cancer
patient

Assigning a class [1.. $N_c$] to each nucleus center
using its associated feature vector and the CAMs
stored in the database ←———— Database of
CMAs

Computing a treatment recommendation score
based on a statistics of cell centers assigned to the
classes

Score
> predefined
threshold? —— yes ——→ Recommend
treatment
of cancer
patient

FIG. 19

Patch 1 with size 1
(e.g. 32um)

Detected
nucleus
center

Patch 2 with size 2
(e.g. 64um)

Digital tissue slide stained with a
nuclear biomarker and functional,
protein-specific biomarker

(Optional) color
normalization
and separation

Stack of
image layers

Patch 1

Patch 2

Patch 2
downsampled to
match size of
Patch 1

Feature
vector

real

fake

Generative
Adversarial
Network
(GAN)

Generator for
fake images

Discriminator
for real/fake
classification

real/fake
decision
neuron

FIG. 20

FIG. 21

Feature
vector at
bottleneck layer

(Optional) color
normalization
and separation

Stack of
image layers

Patch 1

Patch 2

Patch 2
downsampled to
match size of
Patch 1

Encoder

Decoder

Autoencoder CNN

FIG. 22

Feature vector from
combined bottleneck layers

(Optional) color
normalization
and separation

Patch 1

Patch 2

Patch 2
optionally
downsampled to
match size of
Patch 1

Encoder

Decoder

Autoencoder 1 CNN

Encoder

Decoder

Autoencoder 2 CNN

FIG. 23

Feature vector

Patch 1

(Optional) color
normalization
and separation

CNN 1

Nucleus level CNN
(e.g. discriminator
part of Fig 3a)

Patch 2

Patch 2
**optionally**
downsampled to
match size of
Patch 1

CNN 2

Region level CNN
(e.g. generated by fully
supervised epithelium
detection)

FIG. 24

| Dataset |
|---|

| H&E |
|---|

| PD-L1, SP142 |
|---|

| PD-L1, SP263 |
|---|

1300 blocks, NSCLC, 20x        900 blocks, NSCLC, 20x

FIG. 25

| Yrs in Trial | Died |
|:---:|:---:|
| 3 | 1 |
| 5 | 1 |
| 8 | 1 |
| 10 | 0 |
| 5 | 1 |

Set of Tissue Slides

Survival Information
per patient

Overall Survival
Progression Free Survival
Best Overall Response

| Cell Feature Extraction | Cluster identification | Survival Learning |

FIG. 26

Tumor Epithelium

Cellular Level

CNN for epithelium classification

CNN for cell classification

FIG. 27

Tumor Epithelium

Cellular Level

CNN for epithelium region classification

CNN for cell classification

Feature Vector FV_celllocation_i =  FV_Cells  FV_region

FIG. 28

Context:
32 px x 32 px =
64 μm x 64 μm

Context:
32 px x 32 px =
32 μm x 32 μm

Context:
32 px x 32 px =
16 μm x 16 μm

5x

10x

20x

GAN model 5x

GAN model 10x

GAN model 20x

FIG. 29

Context:
32 px x 32 px =
64 µm x 64 µm

GAN model 5x

Context:
32 px x 32 px =
32 µm x 32 µm

5x

GAN model 10x

Context:
32 px x 32 px =
16 µm x 16 µm

10x

GAN model 20x

20x

Feature Vector FV_celllocation_i = FV_20x  FV_10x  FV_5x

FIG. 30

FIG. 31

**Example Scenario**   **Pool Cellular Feature Vectors**   **Cell Subtype Clustering**

P = 768 descriptors
per cell

FIG. 32

**Mapping to Tissue Slide**

**Survival Predictor based on Descriptive Statistics**

**Survival Analysis**

Univariate Analysis

Survival decision trees
•Survival Random Forest
for feature selection
•Decision Tree for
survival prediction

•Map cell subtype back to slide
•Compute descriptive statistics

FIG. 33

**Derive heatmaps of cell subtype distribution for each slide**

**Survival Net with heatmaps as input**

**Survival Analysis**

Risk

CNN

FIG. 34

Cell Feature Extraction | Aggregation | Survival Analysis

Risk

CNN

FIG. 35

Europäisches
Patentamt

European
Patent Office

Office européen
des brevets

**EUROPEAN SEARCH REPORT**

Application Number

EP 19 21 4264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | NATHALIE HARDER ET AL: "Automatic discovery of image-based signatures for ipilimumab response prediction in malignant melanoma", SCIENTIFIC REPORTS, vol. 9, no. 1, 15 May 2019 (2019-05-15), XP055682034, DOI: 10.1038/s41598-019-43525-8 * Section "deep-learning based region classification"; page 5 * * Details on the convolutional neural network and training; pages 7,8; figures 1,5 * * first paragraph; page 11 * * Section "Multi-variate models for survival prediction" and Section "Discussion"; page 17 * | 1-16 | INV. G06K9/00 G06K9/62 |
| X,P | NICOLAS BRIEU ET AL: "Domain Adaptation-based Augmentation for Weakly Supervised Nuclei Detection", ARXIV.ORG, CORNELL UNIVERSITY LIBRARY, 201 OLIN LIBRARY CORNELL UNIVERSITY ITHACA, NY 14853, 10 July 2019 (2019-07-10), XP081440331, * Section 2.1 * * Section 2.2 * | 1-16 | TECHNICAL FIELDS SEARCHED (IPC) G06K |

-/--

The present search report has been drawn up for all claims

| Place of search | Date of completion of the search | Examiner |
|---|---|---|
| The Hague | 2 April 2020 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 21 4264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | KATEYS S ENFIELD ET AL: "Hyperspectral cell sociology reveals spatial tumor-immune cell interactions associated with lung cancer recurrence", JOURNAL FOR IMMUNOTHERAPY OF CANCER, BIOMED CENTRAL LTD, LONDON, UK, vol. 7, no. 1, 16 January 2019 (2019-01-16), pages 1-13, XP021270986, DOI: 10.1186/S40425-018-0488-6 * Quantification of cell sociology; page 5 - page 6 * | 1-16 | |
| A | XIANGXUE WANG ET AL: "Prediction of recurrence in early stage non-small cell lung cancer using computer extracted nuclear features from digital H&E images", SCIENTIFIC REPORTS, vol. 7, no. 1, 19 October 2017 (2017-10-19), XP055681653, DOI: 10.1038/s41598-017-13773-7 * Section Material and Methods * | 1-16 | |
| A,P | YU-KUAN HUANG ET AL: "Macrophage spatial heterogeneity in gastric cancer defined by multiplex immunohistochemistry", NATURE COMMUNICATIONS, vol. 10, no. 1, 2 September 2019 (2019-09-02), XP055681686, DOI: 10.1038/s41467-019-11788-4 * Page 13, Robustness of TAM population phenotyping; * | 1-16 | TECHNICAL FIELDS SEARCHED (IPC) |

The present search report has been drawn up for all claims

| Place of search | Date of completion of the search | Examiner |
|---|---|---|
| The Hague | 2 April 2020 | Boltz, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. BRIEU, G. SCHMIDT.** Learning Size Adaptive Local Maxima Selection For Robust Nuclei Detection in Histopathology Images. *ISBI,* 2017
- **BRIEU, N ; SCHMIDT, G.** Learning Size Adaptive Local Maxima Selection for Robust Nuclei Detection in Histopathology Images. *ISBI,* 2017
- **BRIEU, N. et al.** Augmenting TNM Staging with Machine Learning-based Immune Profiling for Improved Prognosis Prediction in Muscle-Invasive Bladder Cancer Patients. *ESMO,* 2018
- **HARDER, N. et al.** Tissue Phenomics for prognostic biomarker discovery in low- and intermediate-risk prostate cancer. *Scientific Report,* 2018
- **KAPIL. A. et al.** Deep Semi Supervised Generative Learning for Automated Tumor Proportion Scoring on NSCLC Tissue Needle biopsies. *Scientific Report,* 2018
- **MEIER, A. ; NEKOLLA, K.** End-to-end learning using convolutional neural networks to predict survival in patients with gastric cancer. *Pathology Visions,* 2018
- **MEIER, A. ; SCHMIDT, G.** Tumor Infiltrating Lymphocytes based Survival Analysis in Colorectal Cancer Stage II. *H&E Slide , DGP,* 2018
- **VANDENBERGHE, M. E. et al.** Relevance of deep learning to facilitate the diagnosis of HER2 status in breast cancer. *Sci Rep,* 2017, vol. 7, 45938